# FASCICULE DE BREVET EUROPEEN

(11) **EP 0 480 828 B1**
(45) Date de publication et mention de la délivrance du brevet: **13.07.1994**
(21) Numéro de dépôt: 91402693.5
(22) Date de dépôt: 09.10.1991
(51) Int. Cl.: B23K 26/00, B23K 26/18, B23K 9/32, B05B 7/14

(54) **Dispositif d'apport de poudre pour revêtements par traitement au faisceau laser**
Vorrichtung zur Zufuhr von Pulver zur Beschichtung mittels Laserstrahlbehandlung
Powder supply device for coating by laser beam treatment

(30) Priorité: 10.10.1990 FR 9012479
(43) Date de publication de la demande: 15.04.1992
(73) Titulaire: SOCIETE NATIONALE D'ETUDE ET DE CONSTRUCTION DE MOTEURS D'AVIATION, "S.N.E.C.M.A.", F-75015 Paris (FR)
(72) Inventeur: Lagain, Georges Laurent, F-77380 Combs-La-Ville (FR)

(56) Documents cités:
- FR-A- 2 642 690
- EP-A-0 335 503

## Description

L'invention concerne un dispositif d'apport de poudre destiné à la réalisation de revêtements par traitement au faisceau LASER.

Des techniques de réalisation de revêtements à partir d'apport de poudre faisant intervenir une fusion au moyen d'un faisceau énergétique, notamment de type LASER, ont été largement développées. Des exemples de mise en oeuvre sont donnés par FR-A-2 605 310, EP-A-0 212 938, EP-A-0 213 498 et GB-A-2 184 380.

Les équipements utilisés comportent généralement un dispositif d'apport de poudre dont le principe est similaire à celui des distributeurs de poudre antérieurement connus et utilisés dans la réalisation de revêtements par projection à la flamme plasma et qui fonctionnent notamment en ayant comme véhicule un gaz porteur sous des pression et débit déterminés, généralement un gaz neutre tel que l'argon. Ces techniques dans leur application aux dépôts sous faisceau LASER ont cependant soulevé des problèmes :
- la vitesse élevée des particules de poudre entraînées par le gaz porteur entraîne des pertes et un gaspillage de la poudre,
- les intersections du faisceau LASER et de la matière sont perturbées par des phénomènes de soufflage.

Certaines tentatives de solutions et d'améliorations aux dispositifs précédents ont été proposés. C'est ainsi que US-A-4 270 675 décrit un distributeur de poudre dans lequel la régularité du débit est assurée par une tige reliée à un vibrateur. FR-A-2 452 528 prévoit un dispositif régulateur réglant l'admission des particules de poudre dans un tube parcouru par le gaz porteur. US-A-4 730 093, US-A-4 743 733 et FR-A-2 642 690 décrivent un dispositif comportant une roue volumétrique adjointe au réservoir et un conduit d'amenée de poudre équipé d'un vibrateur à air. EP-A-0 173 654 prévoit un asservissement des paramètres d'apport de poudre. On connaît par EP-A-0 335 503 un appareil de nettoyage ou découpe par jet liquide sous pression entraînant des particules abrasives, comportant des dispositions de réglage du débit.

Toutefois, aucune de ces solutions connues ne donne entière satisfaction et dans certaines applications particulières les problèmes relevés ci-dessus ne sont pas complètement résolus par l'utilisation des équipements connus. Le but de l'invention est par conséquent d'obtenir un dispositif qui permet d'amener la poudre à un endroit choisi par rapport au faisceau énergétique LASER, de façon localisée et avec une faible vitesse de particule, évitant ainsi les inconvénients relevés ci-dessus et notamment un rendement insuffisant dû aux pertes de poudre ainsi que les risques de perturbations par soufflage qui seraient nuisibles à la qualité des résultats.

Un dispositif d'apport de poudre conforme à l'invention et répondant à ces conditions est caractérisé en ce que sur le conduit d'amenée de poudre est insérée une chambre de détente dans laquelle pénètre la partie amont dudit conduit d'amenée de poudre, l'extrémité de ladite partie amont portant un diffuseur de poudre dans la chambre de détente, ladite chambre comportant au moins une partie conique solidaire de la partie aval du conduit d'amenée de poudre terminée par une buse et comportant en outre, un conduit d'échappement muni d'un réglage de débit et placé sur une face opposée à ladite partie aval du conduit d'amenée de poudre.

Avantageusement, la position dudit diffuseur de poudre est réglable en hauteur à l'intérieur de la chambre de détente et, par ailleurs, la buse de sortie peut comporter un diffuseur de gaz protecteur et/ou un dispositif de refroidissement par eau.

D'autres caractéristiques et avantages de l'invention seront mieux compris à la lecture de la description qui va suivre d'un mode de réalisation de l'invention, en référence aux dessins annexés sur lesquels ;
- la figure 1 représente une vue schématique d'ensemble d'une installation d'apport de poudre pour dépôt au LASER ;
- la figure 2 montre, selon un détail agrandi de la figure 1, une vue schématique en coupe d'une chambre de détente à diffuseur de poudre constituant le dispositif d'apport de poudre conforme à l'invention ;
- la figure 3 montre schématiquement les variantes A, B, C de position de la buse du dispositif d'apport de poudre représenté sur les figures 1 et 2.

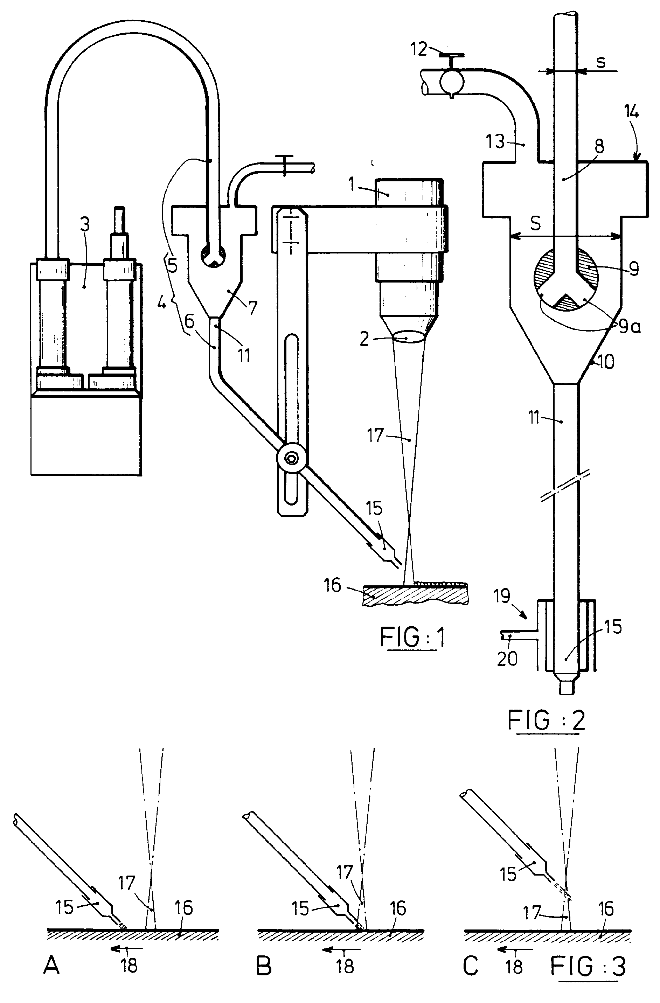

Une installation d'apport de poudre pour dépôt au LASER schématiquement représentée sur la figure 1 comporte, comme cela est généralement connu pour diverses applications connues en soi, un générateur 1 d'un faisceau énergétique de type LASER, un système optique 2 de focalisation du faisceau, un distributeur de poudre 3 d'un type connu en soi comportant son dispositif de commande et notamment un débitmètre ainsi qu'une réserve de poudre et une liaison à une source d'alimentation en gaz porteur du type gaz neutre tel que, par exemple, de l'argon. De manière habituelle et généralement connue, la poudre est amenée dans une zone de fusion résultant du faisceau LASER par un conduit 4 comportant notamment certaines parties souples 5 et certaines parties rigides 6.

De manière remarquable et conforme à l'invention, tel que représenté plus en détails sur la figure 2, sur ledit conduit 4 d'amenée de poudre, est insérée une chambre 7 présentant au moins une section 5 élargie par rapport à la section s du conduit d'arrivée 8 dont une partie pénètre à l'intérieur de ladite chambre 7. L'extrémité dudit conduit d'arrivée 8 porte un diffuseur 9 de poudre dont la position à l'intérieur de la chambre 7 est réglable, notamment en hauteur. Le diffuseur 9 comporte notamment des passages 9a de répartition de la poudre. La chambre 7 procure une détente du gaz porteur tandis que le diffuseur 9 assure un écoulement régulier et calibré de la poudre. La surface intérieure de la chambre 7 est polie et exempte de toute aspérité afin d'éviter les retenues de poudre. La chambre 7 comporte au moins une partie conique 10 à sa base à laquelle est raccordé un conduit de sortie 11. Le débit dans ce conduit de sortie 11 inférieur au débit dans le conduit d'arrivée 8 est ajusté au niveau de la chambre de détente 7 au moyen d'un réglage de débit effectué grâce à une vanne 12 disposée, un conduit d'échappement 13 placé sur la chambre 7 et raccordé sur la face 14 de ladite chambre 7, opposée à la sortie. Ledit conduit de sortie 11 est terminé par une buse 15 d'éjection.

Le fonctionnement du dispositif se déduit aisément de la description qui vient d'en être faite en référence aux figures 1 et 2. Au niveau du distributeur de poudre 3 sont réglés la quantité de poudre nécessaire pour le traitement au laser à mettre en oeuvre ainsi que les pression et débit assurant un acheminement de la poudre avec gaz porteur jusqu'à la chambre 7 sans risque d'accumulation par création de bouchon et sans à-coups.

Un écoulement correct de la poudre à l'intérieur de la chambre 7 elle-même est ensuite assuré au moyen du diffuseur 9. En fonction des applications particulières, cet élément du dispositif, le diffuseur 9 est interchangeable. La vitesse de la poudre à la sortie de la chambre 7 étant réglée au moyen de la vanne d'échappement 12, la poudre est amenée à faible vitesse, à travers la buse 15 sur la zone de traitement au faisceau LASER d'une pièce 16. En fait, de cette manière, la poudre est amenée, uniformément et de façon concentrée sur la tâche focale du faisceau LASER.
Comme représenté schématiquement sur la figure 3, suivant les applications particulières envisagées, différentes configurations de travail sont possibles. Suivant la position adoptée pour la buse d'éjection 15 par rapport au faisceau LASER symbolisé en 17, on peut ainsi obtenir, selon la variante A, une pré-déposition de la poudre en amont du faisceau LASER ou selon la variante B, une injection de la poudre dans le bain de fusion créé par l'irradiation du faisceau LASER sur la pièce 16 ou encore, selon la variante C, une injection de la poudre directement dans le faisceau. Le sens de déplacement étant représenté par les flèches 18, la buse 15 a été représentée en position amont sur la figure 3 et des configurations similaires peuvent être prévues en plaçant ladite buse 15 en position aval par rapport au faisceau LASER.

La buse 15 d'éjection est également prévue interchangeable et son diamètre de sortie qui peut être inférieur à 1 mm est déterminé en fonction des applications particulières et est adaptée à la dimension de la tache focale de manière à obtenir la fusion de la quantité maximale de poudre amenée dans le faisceau. Dans certains cas, et notamment pour accroître la durée de vie de la buse 15 en évitant une détérioration rapide dûe à un échauffement excessif, il peut être avantageux d'adjoindre à ladite buse 15 un refroidissement par eau.

Dans certains cas également, la buse 15 d'éjection est avantageusement équipée d'un diffuseur 19 de gaz intégré.

Dans ce cas, la buse 15 est enveloppée d'une double chemise constituant le diffuseur 19, l'espace ainsi ménagé étant alimenté par au moins une canalisation 20 en gaz neutre protecteur.

Le flux gazeux complémentaire a pour effet d'assurer une protection contre l'oxydation du matériau déposé et de la zone traitée de la pièce 16.

Il permet également, par soufflage, de débarrasser ladite zone traitée d'éventuels excès de poudre non fondus et d'obtenir ainsi une surface saine, sans que l'amenée du flux de poudre soit perturbée en cours d'opération.

## Revendications

1. Dispositif d'apport de poudre destiné à la réalisation de revêtements par traitement au faisceau LASER, ledit dispositif comportant un appareil distributeur (3) de poudre fournissant de la poudre avec gaz porteur dans un conduit d'amenée de poudre (4) vers une surface à revêtir caractérisé en ce que sur ledit conduit d'amenée de poudre (4) est insérée une chambre (7) de détente dans laquelle pénètre la partie amont dudit conduit d'amenée de poudre, l'extrémité (8) de ladite partie amont portant un diffuseur (9) de poudre dans la chambre de détente, ladite chambre (7) comportant au moins une partie conique (10) solidaire de la partie aval (11) du conduit d'amenée de poudre terminée par une buse (15) et, comportant en outre, un conduit d'échappement (13) muni d'un réglage de débit (12) et placé sur une face (14) opposée à ladite partie aval (11) du conduit d'amenée de poudre.

2. Dispositif d'apport de poudre selon la revendication 1 dans lequel la position dudit diffuseur (9) de poudre est réglable en hauteur à l'intérieur de ladite chambre (7) de détente et ledit diffuseur (9) comporte des passages (9a) de répartition de poudre.

3. Dispositif d'apport de poudre selon l'une des revendications 1 ou 2 dans lequel ladite buse (15) de sortie amenant le flux de poudre est entourée d'une double chemise reliée à une source d'alimentation en gaz protecteur, formant un diffuseur (19) de gaz.

## Patentansprüche

1. Vorrichtung zur Zufuhr von Pulver für die Herstellung von Überzügen durch Laserstrahlbehandlung
mit einer Pulververteileinrichtung (3), die Pulver mit einem Trägergas in einer Pulverzuführungsleitung (4) an eine mit einem Überzug zu versehenden Fläche liefert,
**dadurch gekennzeichnet,**
daß in die Pulverzuführungsleitung (4) eine Entspannungskammer (7) eingefügt ist, in die der stromaufwärtige Teil der Pulverzuführungsleitung eindringt, wobei der Endbereich dieses stromaufwärtigen Teils in der Entspannungskammer einen Pulverzerstäuber (9) trägt, wobei die Kammer (7) wenigstens einen konischen Teil (10) aufweist, der mit dem in einer Düse (15) endenden stromabwärtigen Teil (11) der Pulverzuführungsleitung fest verbunden ist, und wobei die Kammer (7) außerdem eine mit einer Durchflußregelung (12) ausgestattete Auslaßleitung (13) aufweist, die auf einer dem stromabwärtigen Teil (11) der Pulverzuführungsleitung entgegengesetzten Seite (14) angeordnet ist.

2. Pulverzufuhrvorrichtung nach Anspruch 1, bei der die Position des Pulverzerstäubers (9) in der Entspannungskammer (7) höhenverstellbar ist und der Zerstäuber (9) Durchgänge (9a) zur Pulververteilung aufweist.

3. Pulverzufuhrvorrichtung nach einem der Ansprüche 1 oder 2, bei der die Austrittsdüse (15) zur Zuführung des Pulverstroms von einem doppelten Mantel umgeben ist, der mit einer Quelle zur Zuführung von Schutzgas verbunden ist und einen Gasdiffusor (19) bildet.

## Claims

1. Powder-supply device intended for the production of coatings by LASER beam treatment, the said device including a powder distributing apparatus (3) supplying the powder with carrier gas into a powder delivery pipe (4) towards a surface to be coated, characterized in that an expansion chamber (7) is inserted into the said powder delivery pipe (4), into which chamber the upstream part of the said powder delivery pipe penetrates, the end (8) of the said upstream part carrying a powder diffuser (9) in the expansion chamber, the said chamber (7) including at least one conical part (10) which is integral with that downstream part (11) of the powder delivery pipe terminated by a nozzle (15) and furthermore including an exhaust pipe (13) fitted with a flow-rate adjustment (12) and placed on a face (14) opposite the said downstream part (11) of the powder delivery pipe.

2. Powder-supply device according to Claim 1, in which the position of the said powder diffuser (9) can be adjusted in height inside the said expansion chamber (7) and the said diffuser (9) includes powder-distributing passages (9a).

3. Powder-supply device according to one of Claims 1 and 2, in which the said outlet nozzle (15) delivering the powder flux is surrounded by a double jacket connected to a shielding-gas feed source, forming a gas diffuser (19).
